# EUROPEAN PATENT APPLICATION

(11) **EP 2 457 622 A1**
(43) Date of publication of application: **30.05.2012**
(21) Application number: 10801977.9
(22) Date of filing: 01.07.2010
(51) Int. Cl.: A63B 71/02

(54) **FOAMING COMPOSITION FOR CREATING INDICATIONS FOR A LIMITED DURATION OF TIME**

(30) Priority: 21.07.2009 AR P010002774
(71) Applicant: Silva, Pablo César, Buenos Aires (AR)
(72) Inventor: SILVA, Pablo César, Buenos Aires (AR)
(74) Representative: Maldonado Jordan, Julia
(86) International application number: PCT/ES2010/000286
(87) International publication number: WO 2011/009972

(57) **Abstract**

A foaming composition for generating temporary indications, preferably to mark defensive wall lines and spots for free kick shootout in football, where the foam remains stable over a very short but sufficient period of time to take the shot, wherein the composition comprises a propellant, a foaming emulsifier, a cation chelating agent, a preservative and water.

## Description

### Field of the Invention

The present invention relates to the field of devices and products useful for generating marks, signals, writings, coatings, and the like, which remain stable for a predetermined and limited period of time, during which desired period they perform-a signaling function, and then completely vanish. More particularly, the invention refers to a foam that may be easily applied by means of a spraying or aerosol-type device, such foam having a texture and volume that make it visible from a great distance, and that will remain in such condition for a very short period of time, but nevertheless long enough as to be useful in an event, such as a sporting event.

### Description of the prior art

In some events and shows it is necessary to temporarily define some areas or points of reference to perform an action. For example, in football (soccer), the game is stopped if any of the players commits a foul, and a "free kick", as it is called in football jargon, is awarded to the opposing team, to be kicked from the spot where the foul was committed. In some of these kicks, the opposing team to the one that was awarded the free kick is allowed to form a "wall" of players meant to hinder to some extent the performance of the free kick. According to the rules and regulations of this sport, such wall should be formed beyond a certain distance, officially 9.15 meters, from the spot where the free kick will be taken, and there's where defending players line up to form the wall. However, the referees rarely get the players forming the wall to respect the required distance, and it is difficult for referees to check whether the players keep lined up at or beyond the appropriate distance when sanctioning the foul. While the performer prepares to shoot the free kick, it is very common that players forming the wall illegally move forward and trespass the spot indicated by the referee, without the referee noticing it, because he has no point or line of reference to determine whether the players have moved forward with respect to the indicated virtual line.

Given the unavailability of elements suitable for temporary marking of a line or point to be observed by either the defensive players forming a wall, or by the player shooting the free kick, it would be highly desirable to count with some type of indication which should be visible during a short period of time, enough for players to position themselves and perform the free kick, and that would afterwards disappear without leaving visible or residual traces that could be potentially harmful to either the turf or playing field surface.

### SUMMARY OF THE INVENTION

It is therefore an object of the present invention to provide a novel product for temporarily marking and signaling a surface, such as a playing-field ground, by clearly applying visible marks that will last for a short period of time and will then disappear without leaving any traces or causing any other consequences.

It is another object of the present invention to provide a foaming composition, preferably included in a spray dispensing canister, which is applicable to different surface textures, such as grass, turf, concrete, clay, granite tiles, ceramics, wooden floors and any other surface where it may be required to make temporary marks, regardless of weather conditions such as intense sunlight, heat, cold, rain, etc..

It is still another object of the present invention to provide an inexpensive foaming composition which, when applied, provides a continuous marking of a thickness that would make it visible from a considerable distances such as those associated with playing fields.

It is still another object of the present invention to provide a foaming composition which, when applied, lasts and remains stable for a short period of time, for example from 1 to 3 minutes, and which may be seen from a stand in a stadium, having a thickness or width of, for example, 10 cm.

It is still another object of the present invention to provide a foaming composition which, upon disappearing, does not leave any slippery residue or film and which is not toxic for humans or harmful to the turf or to other surface on which may be applied.

It is still another object of the present invention to provide a foaming composition for generating indications lasting for a limited period of time, preferably for marking "wall" lines and free-kick shootout points in football, where the foam remains stable over a very short but sufficient period of time to take the shot, wherein the composition comprises a propellant, a foaming emulsifier, a cation chelating agent, a preservative, and water.

It is still another object of the present invention to provide a foaming composition for generating temporary indications, used to mark lines and/or areas that must be clearly visible during a limited period of time, and which afterwards disappear, leaving no residues or traces, wherein said composition comprises:
at least one propellant;
at least one foaming emulsifier;
at least one cation sequestrant/chelating agent;
at least one non-toxic preservative,
and water,
wherein said foam, once formed, will remain stable for a maximum of three minutes, regardless of weather conditions.

### DETAILED DESCRIPTION OF THE INVENTION

Referring now to the invention in more detail, it comprises a foaming composition which can be used to make all types of marks or signals, which last for a limited and controlled period of time, preferably to be used in marking lines and/or areas that must be clearly visualized during a limited period of time and then disappear without leaving any residue or trace. The composition of the invention comprises:
at least one propellant;
at least one foaming emulsifier;
at least one cation chelating agent;
at least one non-toxic preservative;
and water,
wherein such composition is capable of generating a foam, when applied with an aerosol canister of the type used for applying foams, said composition being stable for a time range between a minimum and a maximum period of time, preferably for at least 1 minute and up to a maximum of three minutes, after which it will disappear without leaving any marks or residues that might damage the surface onto which it was applied or affect the game played thereon. Such conditions must be met under any weather conditions, i.e., stability should be maintained under rain, cold, heat, sunlight, etc.

The foam of the invention finds particular use in marking lines, spots or areas on the turf of a football field; however the foam has also proven effective on other surfaces, if necessary, such as clay, for tennis, such as concrete, wood, etc., for indoor games, and such as granite tiles, ceramic tiles or any other kind of floor surfaces.

For example, if used during a football game, when a foul is sanctioned with a free kick, the referee marks the spot where the player must place the ball and also marks the line behind which the opposing team may line up its wall of defensive players. The foam indicating both the shootout spot and the defensive wall line will remain stable for long enough until the free kick is taken, and possibly repeated, but will immediately disappear without leaving marks or residues that might damage the turf, or oily residues that could make the surface slippery for players.

Therefore, the aim of the present invention was to obtain a foam meeting at least the following requirements:
1) A foam capable of being applied on any surface, even those having an uneven texture.
2) It should allow for making a continuous well-delimited line.
3) It should remain stable and visible long enough but not beyond a certain period of time, for example between a minimum of one minute and a maximum of 3 minutes.
4) It should be safe for human beings, turf and other surfaces.
5) It should be reasonably priced.
6) It should be capable of being used in a suitable spray dispensing canister already available in the market, without the need of developing new and expensive containers and/or dispensers, and it should be capable of being applied by means of a spray button without excessive requirements, being applicable downwords, to provide comfort and ease of use to the referees, and it should flow out of the dispenser in a sufficient volume for making the necessary visible marks.
7) It should not form a slippery film that could be dangerous for players.
8) It should be capable of making marks not less than 10 cm thick, so that the referee can see it clearly and thus verify if any player has stepped forward.

All of the above requirements led to conducting numerous assays until a formulation fulfilling all of them was obtained. This also led to obtaining different formulations and evaluating them on different playing fields, even in official matches, until the referees found them satisfactory, as the latter will be the final users of the product. All these trials were conducted in secret, and when carried out in official matches organized by AFA (Argentine Football Association) an absolute control over foam dispensers manipulated by the referees was maintained, so that they would be under the control of the inventors and the formulations comprising them would not be revealed.

As noted above, numerous tests were carried out before the final formulation was obtained and thus many formulations that worked well but not as optimally as intended were also obtained. For example, trials began by studying and solving the above-listed items Nos. 4, 5 and 7, mainly analyzing the degree of toxicity of the raw materials that would be involved in the formulation (selected among from 500 different chemicals). Then the performance for Nos. 1 and 2 was studied, with satisfactory results.

Testing of reguirement Nos. 3, 6 and 8, turned out to be a very complex task, because they were highly correlated to each other, so that a change in one of them affected the others. An appropriate combination of formulation, dispenser button and canister was not available in the market. Parameters such as a desired line thickness of 10 cm, valve availability, adequate and necessary flow rate, i.e., grams of product discharged per second, had to be taken into consideration.

Finally, the parameters were adjusted in order to submit the product to an AFA referee's opinion. In the referee's opinion, spraying did not result in a line of sufficient width so as to be visible enough at a distance of more than 50 meters and from the stadium stands. This observation led to a reformulation of the spray formula, which took about two months. The formula was modified and tested again, and this time it was accepted.

At the same time, the formulation was tested for stability and compatibility, to verify whether the product attacked the canister, and whether the product would not decompose over time, that is, over a period of at least three years, using a method by CADEA (*Cámara Argentina Del Aerosol*). The canister remained in perfect conditions and the product also remained unchanged. All physico-chemical parameters, such as pH, viscosity, density, aroma, percentual activity, color, etc., as well as microbiological parameters (absence of bacterial and fungal contamination) were acceptable.

To achieve a suitable product, each of its components and their combinations were tested. To that end, an emulsifier and a foaming agent were selected so as to comply with the purposes of the invention. Several foaming emulsifiers were assayed, among others : sorbitan oleate (Span 20), sorbitan trioleate, sorbitan palmitate, sorbitan stearate, sorbitan tristearate, sorbitan isostearate, sorbitan distearate, sorbitan dioleate, sorbitan diisostearate, sorbitan triisostearate, sorbitan cocoate, sorbitan caprilate, sorbitan sesquiisostearate, sorbitan sesquioleate, sorbitan sesquistearate, polyisosorbates series 21 - 40 - 60 - 61 - 65 - 80 - 81 - 85, lauryl sulfate, ammonium lauryl sulfate, sodium lauryl sulfate, TEA lauryl sulfate, sodium trideceth sulfate, sodium C14-17 alkyl sec sulfonate, sodium cocoyl glutamate, sodium lauroamphoacetate, TEA-PEG 3, cocamine oxide, cocamidopropyl betaine, lauryl betaine, trideceth-7 carboxilic acid, sodium cocoyl isethionate, sodium methyl cocoyl taurate, sodium lauryl sarcosinate, disodium sulfosuccinate laureth, cethyl phosphate, polyglyceryl-2 sesquioleate, OLETH -2, -3, -4, -5, -6, -7, -8, -9, -10, - 12, -15, -16, -20, -23, -25, -30, -40, -44, -50 and their derivatives, LAURETH -1, -2, -3, -4, -5, -6, -7, -8, -9, - 10, -11, -12, -13, -14, -15, -16, -20, -23, -25, -30, -40 and their derivatives, STEARETH -2, -3, -4, -10, -11, -13, -14, -15, -16, -20, -21, -25, -27, -30, -40, -50 and their derivatives, PEG-5 cocamide, PEG-40 hydrogenated castor oil, cetrimonium chloride, PEG-5 stearyl ammonium lactate, cethyl palmitate, cethyl PPG-2-isodeceth-7-carboxilate, cocamide DEA and polyoxyethylenated sorbitan monolaurate (polysorbate 20). All of these emulsifiers were tested in amounts comprising from 0.50% to 5.00%.

For the purpose of the present description and claims, all percentages (%), when referred to one or more components of the composition, are expressed as % by weight based on the total weight of the composition.

In general, all the above foaming emulsifiers demonstrated to be adequeate for the formulation of the invention; however some of them did not show the expected efficiency. For example, sorbitan oleate (Span 20), sorbitan palmitate, sorbitan stearate, sorbitan isostearate, sorbitan distearate and sorbitan dioleate provided low stability at concentrations from 0.50 % to 1.00 %, and were too stable at between 1.00 % and 5.00 %, which was not satisfactory according to the purposes of the invention.

Also tested, from 0.50% to 5.00 %, were sorbitan diisostearate, sorbitan cocoate, sorbitan caprilate, sorbitan sesquiisostearate, sorbitan sesquioleate and sorbitan sesquistearate, but in this case product viscosity was too high, which again was not as expected within the optimal purposes of the invention.

Other assays included the use, at concentrations of from 0.50% to 5.00%, of the following emulsifiers: sorbitan stearate, sorbitan triisostearate, sorbitan trioleate and sorbitan tristearate, all of which rendered good, although not the most desirable results, as it was required to work at very high pH values (pH 9.5), which might be harmful to the turf.

Other assays involved polyisosorbates of series 21, - 40, -60, -61, -65, -80, -81 and -85, all of which showed some incompatibility with the propellant, and therefore they were not preferred for their use in the invention. Other emulsifiers included lauryl sulfate, ammonium lauryl sulfate, sodium lauryl sulfate, TEA lauryl sulfate, sodium trideceth sulfate, sodium C14-17 alkyl sec sulfonate, but some of them resulted in undesirable precipitates that clogged the valve and adversely affected the product performance. Also tested were sodium cocoyl glutamate, sodium lauroamphoacetate, TEA-PEG 3, cocamine oxide, cocamidopropyl betaine, lauryl betaine, trideceth-7 carboxilic acid, which produced a good emulsion but spraying was not as satisfactory as expected.

A good, though not the desired foam, was also achieved using emulsifiers such as sodium cocoyl isethionate, sodium methyl cocoyl taurate, sodium lauryl sarcosinate, disodium sulfosuccinate laureth, cethyl phosphate, polyglyceryl-2 sesquioleate. Other foams of good quality, but too stable were achieved using emulsifiers such as OLETH -2, -3, -4, - 5, -6, -7, -8, -9, -10, -12, -15, -16, -20, -23, -25, -30, -40, -44, -50 and their derivatives, LAURETH -1, -2, -3, - 4, -5, -6, -7, -8, -9, -10, -11, -12, -13, -14, -15, -16, - 20, -23, -25, -30, -40 and their derivatives, STEARETH -2, -3, -4, -10, -11, -13, -14, -15, -16, -20, -21, -25, -27, - 30, -40, -50 and their derivatives. Another foam was obtained using emulsifiers such as PEG-5 cocamide, PEG-40 hydrogenated castor oil, cetrimonium chloride, PEG-5 stearyl ammonium lactate, cethyl palmitate, cethyl PPG-2-isodeceth-7-carboxilate, cocamide DEA, but in some assays perforations of the container occurred, while product decomposition was observed in others. Therefore they were not included among the preferred emulsifiers of the invention.

Finally it was concluded that polyoxyethylenated sorbitan monolaurate (polysorbate 20) rendered the best features and expected results, at a content from 0.50% to 5.00%, thus obtaining excellent characteristics at a concentration of about 0.94%.

Different propellants were also tested: dimethylether, difluorethane, tetrafluorethane, butane, isobutane, and propane were used. Dimethyl ether was used for being water-soluble, which resulted in a completely homogenous spray forming a single phase with the aqueous solution. Propellants were used at percentages from 5% to 30%. The spray showed a very good performance but when tested for compatibility, some attack and perforation of the container was observed, therefore different types of antioxidants to avoid corrosion were evaluated. However, for this reason this propellant was not included among the preferred ones. Difluoroethane, which is not water-soluble, was also tested in concentrations from 5% to 30%. The foams obtained with this propellant were too stable, with a duration of about 2 hs, therefore it was not considered among the preferred propellants of the invention. Another propellant used in the invention is tetrafluoroethane, which is not water-soluble, tested in concetrations from 5% to 30%. As the resulting foams lasted for too long it was also included among the not preferred propellants of the invention. Finally, butane-isobutane-propane was tested from 5% to 30%. The resulting foams met the requirements of the invention.

The composition of the invention also includes a cation chelating agent selected from the group consisting of diethylene triamino pentaacetic acid (DTPA), pentasodium DTPA, 1,3 DTPA, ferric ammonium 1,3 DTPA, ethylenediaminetetraacetic acid (EDTA), disodium EDTA, calcium disodium EDTA, ferric ammonium EDTA, tetrasodium EDTA. However, diethylene triamino pentaacetic acid (DTPA), pentasodium DTPA, 1,3 DTPA, and ferric ammonium 1,3 DTPA did not yield the preferred results as expected by the invention. According to the invention, tetrasodium EDTA acid, from 0.20% to 3.00%, yielded the best results.

The composition of the invention also includes a preservative selected from the group consisting of 2-bromo-2-nitro-1,3-propanediol; 1,3-dimethylol-5,5-dimethylhydantoin; chloroxylenol; methylparaben; propylparaben; tertiary butylhydroquinone; diazolidinyl urea, and a composition of diazolidinyl urea, propylene glycol, and butylcarbamate. The preservatives 2-bromo-2-nitro-1,3-propanediol; 1,3-dimethylol-5,5-dimethylhydantoin; chloroxylenol; methylparaben; propylparaben, and tertiary butylhydroquinone, however, showed some bacterial proliferation and therefore they were not selected as preferred preservatives of the invention. According to the invention, the preferred preservative comprises a composition of diazolidinyl urea, propylene glycol and butylcarbamate, at between 0.10% and 2.00%. The preservative prevents the growth of Gram-positive and Gram-negative bacteria, molds and yeasts, as well as a great number of common microorganisms. No additional preservatives are needed, as they are efficient at low levels, so that concentrations of only 0.1% to 0.5% are required. Said composition may be used in rinsable products as well as in those remaining on the skin. It is compatible with almost all raw materials used in formulating personal care products, including proteins, vitamins, botanical extracts, surfactants, and other complex ingredients. This preservative is applied as water-in-oil and oil-in-water emulsions, sunscreen products, moisturizing creams and lotions, make-up and other highly pigmented products.

This invention is best illustrated in the following example, which should not be construed as limiting the scope of the invention. On the contrary, it should be clearly understood that other possible embodiments, modifications and equivalents thereof may be devised upon reading the present description by someone with average skill in the art without departing from the spirit of the present invention and/or the scope of the appended claims.

### EXAMPLES

A foaming composition was obtained which was successfully applied on different surfaces and in particular on turf, wherein the foam remained stable, even under conditions of heavy rain, for a period comprising from 1 to 3 minutes, said composition comprising the following:
at least one propellant, in a percentage from 3.00% to 15.00% by weight of the total weight of the composition;
at least one foaming emulsifier, in a percentage from 0.20% to 6.00% by weight of the total weight of the composition;
at least one cation chelating agent, in a percentage from 0.20% to 3.00% by weight of the total weight of the composition;
at least one non-toxic preservative, in a percentage from 0.10% and 2.00% by weight of the total weight of the composition;
and water, in a percentage from 80.00% to 95.00% by weight of the total weight of the composition.

More precisely, according to the preferred formulation of the invention, said foaming emulsifier comprises polyoxyethylenated sorbitan monolaurate (polysorbate 20), in a percentage from 0.50% to 5.00%, at a concentration of 0.94%, said propellant comprising butane-isobutane-propane, said cation chelating agent comprising tetrasodium EDTA and in a percentage from 0.20% to 3.00%, said preservative comprising said composition of diazolidinyl urea, propylene glycol, and butylcarbamate, in a percentage from 0.10% to 2.00%, and water is distilled water, in a percentage from 80.00% to 95.00%

## Claims

1. A foaming composition for generating temporary indications used for marking lines and/or areas to be clearly visualized during a limited period of time and then disappearing without leaving any residues or traces, **characterized by** comprising:
at least one propellant;
at least one foaming emulsifier;
at least one cation chelating agent;
at least one non-toxic preservative;
and water,
wherein said foam, once formed, remains stable for a maximum of three minutes, regardless of weather conditions.

2. The foaming composition according to claim 1, **characterized in that** said foaming emulsifier is selected from the group consisting of sorbitan oleate (Span 20), sorbitan trioleate, sorbitan palmitate, sorbitan stearate, sorbitan tristearate, sorbitan isostearate, sorbitan distearate, sorbitan dioleate, sorbitan diisostearate, sorbitan triisostearate, sorbitan cocoate, sorbitan caprilate, sorbitan sesquiisostearate, sorbitan sesquioleate, sorbitan sesquistearate, polyisosorbates of the series 21 - 40 - 60 - 61 - 65 - 80 - 81 - 85, lauryl sulfate, ammonium lauryl sulfate, sodium lauryl sulfate, TEA lauryl sulfate, sodium trideceth sulfate, sodium C14-17 alkyl sec sulfonate, sodium cocoyl glutamate, sodium lauroamphoacetate, TEA-PEG 3, cocamine oxide, cocamidopropyl betaine, lauryl betaine, trideceth-7 carboxilic acid, sodium cocoyl isethionate, sodium methyl cocoyl taurate, sodium lauryl sarcosinate, disodium sulfosuccinate laureth, cethyl phosphate, polyglyceryl-2 sesquioleate, OLETH -2, -3, -4, -5, -6, -7, -8, -9, -10, - 12, -15, -16, -20, -23, -25, -30, -40, -44, -50 and their derivatives, LAURETH -1, -2, -3, -4, -5, -6, -7, -8, -9, - 10, -11, -12, -13, -14, -15, -16, -20, -23, -25, -30, -40 and their derivatives, STEARETH -2, -3, -4, -10, -11, -13, -14, -15, -16, -20, -21, -25, -27, -30, -40, -50 and their derivatives, PEG-5 cocamide, PEG-40 hydrogenated castor oil, cetrimonium chloride, PEG-5 stearyl ammonium lactate, cethyl palmitate, cethyl PPG-2-isodeceth-7-carboxilate, cocamide DEA, and polyoxyethylenated sorbitan monolaurate (polysorbate 20).

3. The foaming composition according to claim 2, **characterized in that** said foaming emulsifier is present in the composition in a percentage from 0.50% to 5.00%.

4. The foaming composition according to claim 3, **characterized in that** said foaming emulsifier is present in the composition in a percentage from 1.00% to 5.00% .

5. The foaming composition according to claim 3, **characterized in that** said foaming emulsifier comprises polyoxyethylenated sorbitan monolaurate (polysorbate 20), which is present in a percentage from 0.50% to 5.00%, at a concentration of 0.94%.

6. The foaming composition according to any of the preceding claims, **characterized in that** said propellant is selected from the group consisting of dimethylether, difluorethane, tetrafluorethane, butane, isobutane, and propane.

7. The foaming composition according to claim 6, **characterized in that** said propellant is present in a percentage from 5% to 30%.

8. The foaming composition according to claim 7, **characterized in that** said propellant comprises butane-isobutane-propane.

9. The foaming composition according to any of the preceding claims, **characterized in that** said cation chelating agent is selected from the group consisting of diethylene triamino pentaacetic acid (DTPA), pentasodium DTPA, 1,3 DTPA, ferric ammonium 1,3 DTPA, ethylenediaminetetraacetic acid (EDTA), disodium EDTA, calcium disodium EDTA, ferric ammonium EDTA, and tetrasodium EDTA.

10. The foaming composition according to claim 9, **characterized in that** said cation chelating agent comprises tetrasodium EDTA, which is present in a percentage from 0.20% to 3.00%.

11. The foaming composition according to any of the preceding claims, **characterized in that** said preservative is selected from the group consisting of 2-bromo-2-nitro-1,3-propanediol; 1,3-dimethylol-5,5-dimethylhydantoin; chloroxylenol; methylparaben; propylparaben; tertiary butylhydroquinone; diazolidinyl urea, and a composition of diazolidinyl urea, propylene glycol, and butylcarbamate.

12. The foaming composition according to claim 11, **characterized in that** said preservative comprises said composition of diazolidinyl urea, propylene glycol and butylcarbamate, which is present in a percentage from 0.10% to 2.00%.
